# DEMANDE DE BREVET EUROPEEN

(11) **EP 1 275 866 A1**
(43) Date de publication de la demande: **15.01.2003**
(21) Numéro de dépôt: 02291663.9
(22) Date de dépôt: 03.07.2002
(51) Int. Cl.: F16C 33/60, F16C 33/78

(54) **Palier à roulements pourvu d'une bague en deux parties et butée d'embrayage le comprenant**

(30) Priorité: 13.07.2001 FR 0109419
(71) Demandeur: S.N.R. ROULEMENTS, 74010 Annecy Cédex (FR)
(72) Inventeur: Morin, Emmanuel, 74600 Seynod (FR)
(74) Mandataire: Geismar, Thierry

(57) **Abrégé**

L'invention concerne un palier à roulement (1) du type comprenant une bague tournante (3) et une bague fixe (2), lesdites bagues comprenant chacune un chemin de roulement (6, 8) pour des corps roulants (4) disposés entre elles, dans lequel :
- au moins l'une des bagues (2) est formée en deux parties ;
- des moyens d'assemblage positif (7) sont prévus sur lesdites parties (2a, 2b) de sorte à les solidariser entre elles, les moyens d'association (7) étant agencés pour assurer d'une part un jeu (j) maîtrisé entre les corps roulants (4) et le chemin de roulement (8b) de la seconde partie (2b) lorsque la charge est appliquée dans un sens, et d'autre part le roulement des corps roulants (4) sur la chemin de roulement (8b) lors d'une inversion du sens de la charge.

L'invention concerne également une butée d'embrayage comprenant un tel palier (1).

## Description

L'invention concerne un palier à roulement ainsi qu'une butée d'embrayage comprenant un tel palier.

Les paliers suivant l'invention trouvent particulièrement leur application dans des montages dits à contact oblique dans lesquels les efforts d'utilisation s'exercent principalement suivant une seule direction axiale.

L'un des problèmes qui se pose avec de tels paliers est de pouvoir, pour un encombrement donné, augmenter l'intensité des charges admissibles. En effet, notamment pour les butées d'embrayage, les cahiers des charges imposent que celles-ci soient capables de transmettre des efforts de plus en plus importants.

Pour résoudre ce problème, il est connu d'augmenter le nombre de corps roulants disposés entre les bagues du palier afin de diviser la pression subie par chacun d'eux.

Mais, pour conserver un palier de diamètre constant, il est alors nécessaire de réaliser des bagues particulières entre lesquelles un nombre accru de corps roulants peut être inséré lors du montage du palier. En effet, les bagues classiques enveloppant latéralement les corps roulants, le nombre de corps roulants pouvant être introduit est limité par la place disponible lors de l'excentration desdites bagues.

En particulier, il est connu de réaliser dans l'une des bagues une demi-gorge ouverte axialement dans un sens de sorte à permettre l'introduction d'un nombre accru de corps roulants, ladite demi-gorge formant chemin de roulement lorsque les efforts sont appliqués dans l'autre sens.

Le problème qui se pose alors est celui de la capacité de tels paliers à supporter une inversion du sens axial d'application de la charge. En effet, si une telle situation se produit, les bagues tendent à glisser l'une par rapport à l'autre ce qui peut provoquer, du fait de l'ouverture axiale de la demi-gorge, leur désolidarisation et donc la dislocation définitive du palier.

Pour résoudre ce problème sans apporter de modification au palier, il est possible de monter deux paliers identiques en opposition afin que chacun d'entre eux assure le blocage suivant un sens axial différent ou de prévoir un moyen d'arrêt externe qui assure le blocage axial du palier.

Ces solutions ne sont toutefois pas toujours envisageables et compliquent les montages à réaliser.

Pour résoudre ce problème, le document FR-2 308 013 décrit un palier spécifique dans lequel les cages de roulement sont « clipsées ».

Compte tenu des efforts mis en jeu notamment dans les butées d'embrayage, cette réalisation ne donne pas satisfaction car les clips ne peuvent résister qu'à des efforts axiaux d'intensité relativement faible.

L'invention vise donc notamment à remédier à ces inconvénients en proposant un palier à roulement dans lequel un nombre accru de corps roulants peut être disposé entre les bagues afin de pouvoir l'utiliser dans des montages à contact oblique, ledit palier étant capable de supporter une inversion du sens de la charge axiale d'intensité importante, et ce, sans contrainte sur l'environnement, la masse ou l'encombrement du palier.

A cet effet et selon un premier aspect, l'invention propose un palier à roulement du type comprenant une bague tournante destinée à être associée à un organe tournant et une bague fixe, lesdites bagues comprenant chacune un chemin de roulement pour des corps roulants disposés entre elles, dans lequel :
- au moins l'une des bagues est formée en deux parties, la première partie s'étendant entre un plan latéral avant et un plan latéral intermédiaire et la seconde partie s'étendant entre ledit plan intermédiaire et un plan latéral arrière ;
- des moyens d'assemblage positif sont prévus sur lesdites parties de sorte à les solidariser entre elles ;
- une partie de chemin de roulement est réalisée sur chacune des parties de bague, de sorte à former un chemin de roulement complet après assemblage desdites deux parties de bague ;
les moyens d'association étant agencés pour assurer d'une part un jeu maîtrisé entre les corps roulants et le chemin de roulement de la seconde partie lorsque la charge est appliquée dans un sens, et d'autre part le roulement des corps roulants sur la chemin de roulement lors d'une inversion du sens de la charge.

Selon un deuxième aspect, l'invention propose une butée d'embrayage comprenant au moins un tel palier.

D'autres objets et avantages de l'invention apparaîtront au cours de la description qui suit, faite en référence aux dessins annexés, dans lesquels :
- la figure 1 représente, en coupe longitudinale, un premier mode de réalisation d'un palier selon l'invention ;
- la figure 2 représente, en coupe longitudinale, un deuxième mode de réalisation d'un palier selon l'invention ;
- la figure 3 représente, en coupe longitudinale, une butée d'embrayage comprenant un palier suivant l'invention.

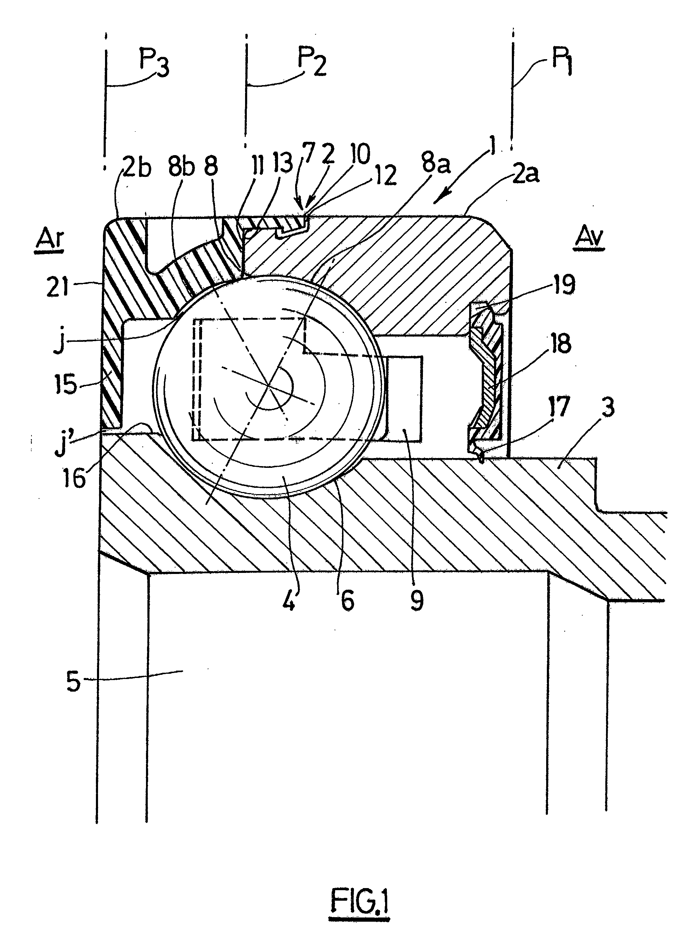

Sur les figures 1 à 3 est représenté un palier à roulement 1 comprenant une bague extérieure fixe 2, une bague intérieure tournante 3 et des corps roulants 4 disposés entre elles afin de permettre la rotation relative de ces deux bagues autour d'un axe.

Toutefois, la description réalisée en relation avec ces figures est directement transposable à un palier 1 dans lequel la bague extérieure 2 est tournante et la bague intérieure 3 est fixe.

Dans la description, les termes « extérieur » et « intérieur » sont définis par rapport à un plan respectivement opposé et en regard de l'axe, les termes « axial» ou « transversal » sont définis par rapport à un plan parallèle à l'axe, les termes « radial » ou « latéral » sont définis par rapport à un plan perpendiculaire à l'axe, les termes « avant» et « arrière » sont définis par rapport aux indices av et ar placés sur les figures.

Le palier 1 est plus particulièrement destiné à être utilisé dans des montages à contact oblique dans lesquels les efforts d'utilisation s'exercent principalement suivant une seule direction axiale, à savoir d'arrière en avant dans les modes de réalisation représentés sur les figures (toutefois la transposition de la présente description pour l'application d'un effort d'avant vers l'arrière est immédiate pour l'homme du métier).

En particulier, le palier 1 est utilisable dans une butée d'embrayage d'un véhicule automobile, la bague intérieure 3 étant alors associée, par exemple par emmanchement, à un arbre de transmission.

Dans les modes de réalisation représentés, la bague intérieure 3 à une structure « classique », à savoir formée d'un anneau annulaire dans lequel d'une part un alésage 5 est formé et d'autre part un chemin de roulement est réalisé sous forme d'une gorge 6 pour envelopper latéralement une partie des corps roulants 4. La bague extérieure 2 est formée en deux parties 2a, 2b qui sont annulaires et concentriques à la bague intérieure 3, lesdites parties étant pourvues respectivement d'un alésage qui est agencé pour loger ladite bague intérieure 3 et les corps roulants 4.

Toutefois, la structure inverse, à savoir la bague intérieure 3 en deux parties et la bague extérieure 2 de type classique, ou la structure dans laquelle les deux bagues 2, 3 sont en deux parties est également envisageable.

On décrit ci-dessous la réalisation de la bague extérieure 2 en deux parties, la première partie 2a s'étendant entre un plan latéral avant P1 et un plan latéral intermédiaire P2 et la seconde partie 2b s'étendant entre ledit plan intermédiaire P2 et un plan latéral arrière P3.

Dans un exemple particulier, la largeur de la première partie 2a est sensiblement plus importante que celle de la seconde partie 2b afin, comme il sera expliqué par la suite, d'assurer un roulement optimal des corps roulants 4 contre la première partie 2a.

Les première et deuxième parties 2a, 2b sont solidarisées entre elles par l'intermédiaire de moyens d'assemblage positif 7 qui sont prévus de façon complémentaire sur chacune d'entre elles.

En outre, une partie de chemin de roulement 8a, 8b est réalisée sur chacune des faces intérieures des deux parties de bague 2a, 2b, de sorte à former un chemin de roulement complet 8 après assemblage desdites deux parties 2a, 2b.

Ainsi, une fois assemblée, la première partie 2a forme partie avant de la bague extérieure 2 et la deuxième partie 2b forme partie arrière, en présentant un chemin de roulement 8 sur la bague extérieure 2 qui est sensiblement identique à celui réalisé sur la bague intérieure 3.

Dans les modes de réalisation représentés sur les figures, les deux parties 8a, 8b de chemin de roulement 8 sont réalisées respectivement sous la forme d'une demi-gorge, les deux demi-gorges étant ouvertes axialement dans une direction axiale opposée.

En variante, la partie de chemin de roulement 8b réalisée sur la deuxième partie 2b de bague 2 peut être de géométrie différente de celle réalisée sur la première partie 2a de bague 2, par exemple plane, conique, sphérique ou torique. En effet, comme décrit dans la suite, seul le chemin 8a réalisé sur la première partie 2a sert pour le roulement sous charge axiale normale (de l'arrière vers l'avant), le chemin 8b de la seconde partie 2b servant pour le roulement uniquement en cas d'inversion, généralement ponctuelle, de la charge axiale.

La réalisation en deux parties de la bague extérieure 2 permet d'introduire un nombre de corps roulants 4 accru par rapport à celui disposable dans un palier à deux bagues classiques. En effet, pour effectuer cette introduction, seule la première partie 2a est montée sur la bague intérieure 3 et excentrée par rapport à elle. Cette excentration, du fait de l'ouverture axiale vers l'arrière du chemin de roulement 8a réalisé sur ladite première partie 2a, permet la formation d'un espace d'introduction plus important qu'avec un chemin de roulement formé d'une gorge complète.

Dans les modes de réalisation représentés, le roulement est assuré par une rangée de billes 4 qui sont maintenues à équidistance par une cage 9.

Ensuite, et pour assurer le montage du palier 1, la deuxième partie de bague 2b est associée à la première 2a pour former la bague extérieure 2 en refermant le chemin de roulement 8.

Le palier 1 ainsi obtenu présente donc une structure de chemin de roulement classique, à savoir une gorge complète recouvrant latéralement une partie des corps roulants 4, de sorte à obtenir un bon blocage axial des corps roulants 4 dans les deux sens, tout en comprenant un nombre de corps roulants 4 accru par rapport à celui disposable dans une structure classique. Le palier 1 combine donc les avantages d'un palier à contact radial (stabilité des bagues 2, 3 l'une par rapport à l'autre sous charges axiales dans les deux sens) tout en présentant, comme il est nécessaire pour des montages à contact oblique, un nombre de corps roulants 4 accru ce qui le rend capable d'accepter des charges axiales importantes dans un sens.

Dans les modes de réalisation représentés sur les figures, les moyens d'assemblage 7 sont formés de doigts 10 s'étendant axialement depuis la face latérale avant 11 de la seconde partie 2b et d'une gorge 12 réalisée sur la face extérieure de la première partie 2a. Les doigts 10 présentent un diamètre supérieur au diamètre extérieur de la face latérale arrière 13 de la première partie 2a.

Ainsi, les moyens 7 sont agencés pour assurer la solidarisation par clipsage des doigts 10 dans la gorge 12 en mettant en appui les faces latérales respectivement arrière 13 et avant 11 des première 2a et seconde 2b parties.

Cette réalisation permet d'assurer un assemblage positif des deux parties de bagues 2a, 2b qui est simple et fiable.

En particulier, le fait que les deux faces latérales 11, 13 soient en contact permet un positionnement précis des deux parties 2a, 2b et donc notamment une bonne maîtrise de la forme du chemin de roulement 8.

En outre, les doigts 10 s'étendant axialement au-delà de la face latérale 13 de la première partie 2a et étant associés sur le diamètre extérieur de ladite partie, cette réalisation permet d'assurer une solarisation robuste et fiable pour toute la durée de vie du palier 1.

De plus, l'assemblage de la seconde partie 2b sur la première 2a est particulièrement simple et permet de livrer un palier 1 « prêt à l'emploi » dès la sortie des lignes de fabrication.

Dans un exemple de réalisation, la première partie de bague 2a est réalisée, comme la bague intérieure 3, en métal ou en alliage métallique classiquement utilisé pour les roulements et la seconde partie de bague 2b est réalisée en matériau thermoplastique tel que le polyamide, par exemple en polyamide 6.6 chargé en fibres de verre.

La gorge 12 peut alors être réalisée par usinage et la seconde partie 2b pourvue des doigts 10 peut-être obtenue de façon monobloc, par exemple par moulage. La seconde partie 2b est ainsi facile à obtenir, avec un coût et un poids raisonnables, tout en présentant une résistance mécanique suffisante.

Cette réalisation est particulièrement adaptée pour les montages à contact oblique. En effet, en fonctionnement normal, c'est-à-dire lorsque la charge axiale est appliquée de l'arrière vers l'avant, le roulement des corps roulants 4 s'effectue quasiment exclusivement sur la partie de chemin de roulement 8a réalisée sur la première partie 2a. A cet effet, les moyens d'association 7 sont agencés pour, en mettant en contact les deux faces latérales 11, 13, assurer un jeu j maîtrisé entre les corps roulants 4 et le chemin de roulement 8b de la seconde partie 2b. En fonctionnement normal, le roulement s'effectue ainsi entre deux chemins de roulement 6, 8a réalisés sur une pièce métallique, et tout contact parasite entre les corps roulants 4 et la seconde partie 2b est évité.

Lors d'une inversion du sens de la charge qui peut survenir ponctuellement, les corps roulants 4 viennent en contact roulant sur la partie de chemin de roulement 8b réalisée sur la seconde partie 2b. Ce contact permet d'assurer la continuité du roulement du palier 1 sans risquer la dislocation de celui-ci puisque les moyens d'association 7 solidarisent les deux parties 2a, 2b. En particulier, le jeu j entre les corps roulants 4 et le chemin de roulement 8b de la seconde partie 2b est ajusté pour éviter, lors de l'inversion de charge, un déplacement trop important de la bague extérieure 2 par rapport à la bague intérieure 3.

En outre, les moyens d'association 7, en assurant une solidarisation positive des deux parties 2a, 2b, permettent de compenser la différence de comportement en utilisation des deux parties 2a, 2b qui sont réalisées en matériau différent, notamment de compenser la différence d'usure et de dilatation thermique, sans risquer une désolidarisation intempestive du palier 1.

En effet, un simple emmanchement de la seconde partie 2b dans la première 2a ne permet pas de subir les contraintes d'utilisation ou les températures de fonctionnement, par exemple typiquement comprises entre -30°C et 120°C dans une butée d'embrayage, sans risquer une désolidarisation dans le temps des deux parties 2a, 2b.

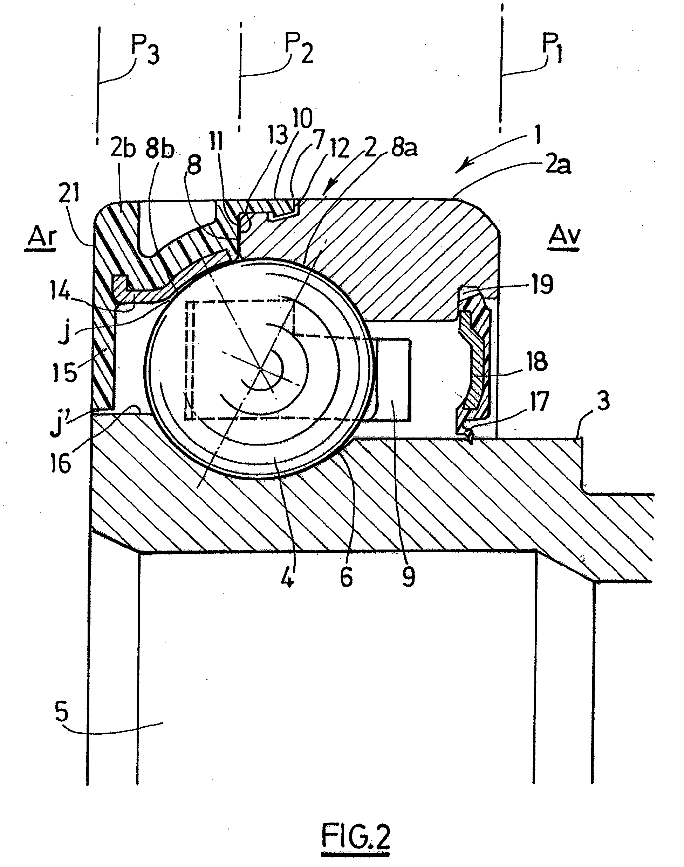

Comme représenté sur la figure 2, et dans le cas d'une utilisation sous inversion de charge d'intensité plus importante, il est possible de disposer, sur la face intérieure de la seconde partie 2b, une pièce métallique emboutie 14 qui forme le chemin de roulement 8b de la seconde partie 2b.

Ainsi, l'usure de la face intérieure de la seconde partie 2b est limitée et sa résistance mécanique globale est améliorée.

Dans les modes de réalisation représentés sur les figures, la seconde partie 2b comprend une extension radiale annulaire 15 s'étendant intérieurement dans le plan latéral arrière P3 de sorte à former déflecteur de protection et/ou d'étanchéité pour le palier 1. Cette réalisation, en remplaçant les moyens de protection et/ou d'étanchéité classiquement utilisés, permet de limiter le nombre de pièces nécessaires pour la réalisation du palier 1.

Selon une première variante (représentée sur les figures), la dimension de l'extension 15 est agencée pour laisser un jeu j' réduit avec la face extérieure 16 de la bague intérieure 3. Cette réalisation permet, en formant une chicane, d'empêcher la pénétration de la pollution à l'intérieur du palier 1 et/ou la centrifugation de lubrifiant à l'extérieur de celui-ci.

Selon une deuxième variante (non représentée), des moyens d'étanchéité sont prévus sur la seconde partie 2b pour venir en appui frottant sur la face extérieure 16 de la bague intérieure 3.

Par exemple, les moyens d'étanchéité peuvent être formés d'une lèvre obtenue par surmoulage d'un matériau élastomérique sur l'extrémité de l'extension 15.

Dans un autre exemple, des moyens d'étanchéité rapportés sont prévus à la place de l'extension 15.

En outre, coté avant, le palier peut également comprendre des moyens d'étanchéité formés par exemple par une lèvre 17 en élastomère qui frotte sur la bague intérieure 3. Pour ce faire, la lèvre est surmoulée sur une armature 18 associée, par exemple par clipsage, dans une rainure 19 prévue sur la face intérieure de la première partie 2a.

Suivant un mode de réalisation, le palier 1 comprend, associé à la bague tournante, un codeur générateur d'impulsions magnétiques, ledit codeur étant destiné à coopérer avec un capteur apte à détecter ces impulsions de sorte à obtenir des informations telles que la vitesse de rotation, la position angulaire et/ou le sens de rotation de la bague tournante par rapport à la bague fixe.

En particulier, le codeur peut être réalisé de façon connue (voir par exemple le document FR-2 700 588) en insérant dans au moins l'une des lèvres d'étanchéité des particules magnétiques telles que des particules de ferrite de manière à former une pluralité de domaines contigus à direction d'aimantation inversée d'un domaine donné par rapport aux deux domaines qui lui sont contigus.

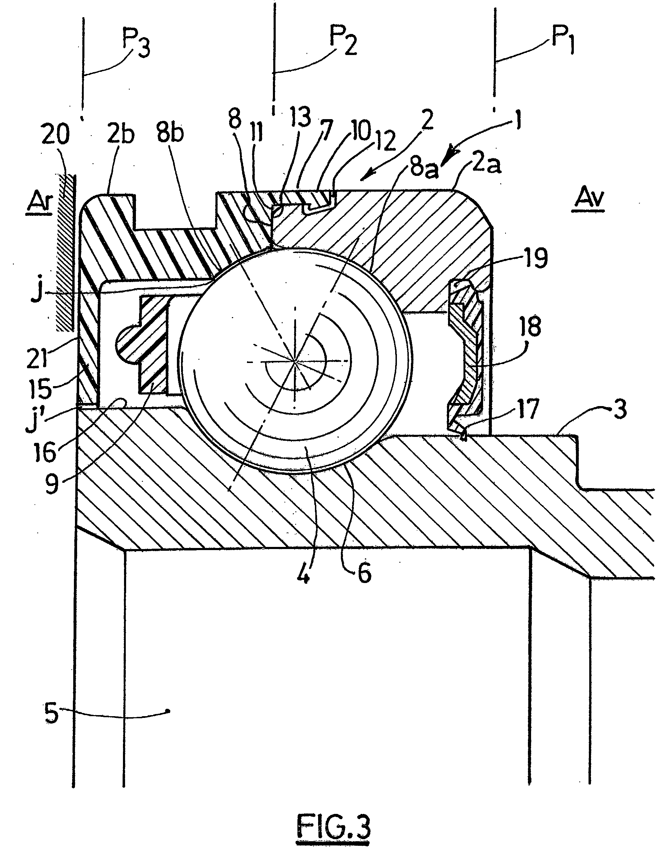

Sur la figure 3 est représentée une butée d'embrayage comprenant un palier 1 suivant l'invention.

Dans celle-ci, une pièce 20 est prévue pour venir en appui sur la face latérale arrière 21 de la seconde partie de bague 2b de sorte à améliorer encore la fiabilité de l'assemblage du palier 1.

En effet, lors de l'inversion du sens de la charge qui peut être provoquée par l'embrayage, la pièce 20 forme butée mécanique pour la seconde partie 2b ce qui permet d'éviter une sollicitation trop importante des moyens d'assemblage 7 et donc un quelconque risque de détérioration du palier 1 sous l'effet des efforts axiaux tendant à le disloquer.

Le palier 1 selon l'invention est donc à la fois capable de subir des charges axiales et radiales importantes et d'accepter une inversion du sens d'application de la charge axiale sans risquer de se disloquer accidentellement.

En outre, les moyens permettant sa réalisation sont sans incidence sur les dimensions axiales ou radiales du palier 1. En particulier, la face latérale arrière 21 de la seconde partie 2b peut être située dans le même plan que celle de la bague intérieure 3. De plus, les deux parties de bague 2a, 2b peuvent présenter des faces extérieures disposées sensiblement dans le même plan axial de sorte à ne pas limiter la capacité d'emmanchement du roulement, par exemple à l'intérieur d'un logement.

Bien au contraire, un tel emmanchement aurait pour effet de serrer les doigts 10 dans la gorge 12 et donc d'assurer une solidarisation encore plus fiable.

## Revendications

1. Palier à roulement (1) du type comprenant une bague tournante (3) destinée à être associée à un organe tournant et une bague fixe (2), lesdites bagues comprenant chacune un chemin de roulement (6, 8) pour des corps roulants (4) disposés entre elles, dans lequel :
- au moins l'une des bagues (2) est formée en deux parties, la première partie (2a) s'étendant entre un plan latéral avant (P1) et un plan latéral intermédiaire (P2) et la seconde partie (2b) s'étendant entre ledit plan intermédiaire (P2) et un plan latéral arrière (P3) ;
- des moyens d'assemblage positif (7) sont prévus sur lesdites parties (2a, 2b) de sorte à les solidariser entre elles ;
- une partie de chemin de roulement (8a, 8b) est réalisée sur chacune des parties de bague (2a, 2b), de sorte à former un chemin de roulement complet (8) après assemblage desdites deux parties de bague (2a, 2b) ;
ledit palier étant **caractérisé en ce que** les moyens d'association (7) sont agencés pour assurer d'une part un jeu (j) maîtrisé entre les corps roulants (4) et le chemin de roulement (8b) de la seconde partie (2b) lorsque la charge est appliquée dans un sens, et d'autre part le roulement des corps roulants (4) sur la chemin de roulement (8b) lors d'une inversion du sens de la charge.

2. Palier selon la revendication 1, **caractérisé en ce que** la seconde partie (2b) est assemblée sur le diamètre extérieur de la première partie (2a).

3. Palier selon la revendication 1 ou 2, **caractérisé en ce que** la première partie de bague (2a) est réalisée en métal ou en alliage métallique, la seconde partie de bague (2b) étant réalisée en matériau thermoplastique tel que le polyamide, par exemple en polyamide 6.6 chargé en fibres de verre.

4. Palier selon la revendication 3, **caractérisé en ce qu'**une pièce métallique emboutie (14) est associée à la seconde partie de bague (2b) de sorte à former la partie de chemin de roulement (8b).

5. Palier selon l'une quelconque des revendications 1 à 4, **caractérisé en ce que** les moyens d'assemblage (7) sont formés de doigts (10) s'étendant axialement depuis la face latérale avant (11) de la seconde partie (2b) et d'une gorge (12) réalisée sur la face extérieure de la première partie (2a), lesdits moyens étant agencés pour assurer la solidarisation par clipsage des doigts (10) dans la gorge (12) en mettant en appui les faces latérales respectivement arrière (13) et avant (11) des première (2a) et seconde (2b) parties.

6. Palier selon l'une quelconque des revendications 1 à 5, **caractérisé en ce que** la seconde partie (2b) comprend une extension radiale annulaire (15) s'étendant intérieurement dans le plan latéral arrière (P3) de sorte à former déflecteur de protection et/ou d'étanchéité pour le palier (1).

7. Palier selon la revendication 6, **caractérisé en ce que** des moyens d'étanchéité sont prévus sur l'extension (15) pour venir en appui frottant sur une face extérieure (16) de l'autre bague (3).

8. Palier selon la revendication 7, **caractérisé en ce que** les moyens d'étanchéité sont formés d'une lèvre obtenue par surmoulage d'un matériau élastomérique.

9. Palier selon l'une quelconque des revendications 1 à 8, **caractérisé en ce qu'**il comprend, associé à la bague tournante, un codeur générateur d'impulsions magnétiques, ledit codeur étant destiné à coopérer avec un capteur apte à détecter ces impulsions de sorte à obtenir des informations telles que la vitesse de rotation, la position angulaire et/ou le sens de rotation de la bague tournante par rapport à la bague fixe.

10. Butée d'embrayage, **caractérisée en ce qu'**elle comprend au moins un palier (1) selon l'une quelconque des revendications 1 à 9.

11. Butée selon la revendication 10, **caractérisée en ce qu'**une pièce (20) est prévue pour venir en appui sur la face latérale arrière (21) de la seconde partie de bague (2b) de sorte à améliorer la fiabilité de l'assemblage du palier (1).
